# EUROPÄISCHE PATENTANMELDUNG

(11) **EP 1 271 056 A1**
(43) Veröffentlichungstag der Anmeldung: **02.01.2003**
(21) Anmeldenummer: 01115026.5
(22) Anmeldetag: 20.06.2001
(51) Int. Cl.: F23R 3/00, F23D 14/66

(54) **Gasturbinen-Brennkammer und für diese vorgesehenes Verfahren zur Luftführung**

(71) Anmelder: SIEMENS AKTIENGESELLSCHAFT, 80333 München (DE)
(72) Erfinder: Tiemann, Peter, 58452 Witten (DE)

(57) **Zusammenfassung**

Um die Aufgabe zu lösen, ein Verfahren zur Luftführung und eine Konstruktion für eine Gasturbinen-Brennkammer bereitzustellen, welche zum einen eine verbesserte Kühlung bei verringerten Druckverlusten ermöglichen und darüber hinaus Überkühlungen durch gezielte Reaktion auf Hotspots vermeidbar sind, wird mit der Erfindung vorgeschlagen eine Gasturbinen-Brennkammer mit einem eine Brennkammer aufnehmenden Gehäuse und wenigstens einem in einem Endbereich angeordneten Brenner, dadurch gekennzeichnet, daß diese wenigstens ein Hohlelement (9) aufweist, welches über wenigstens zwei Öffnungen (7, 8) mit anderen Luftführungsbereichen (5, 6) der Brennkammer (1) in Verbindung steht, wobei eine tangentiale Durchströmung mit einer nachträglichen axialen Zuströmung zum Brenner herrscht.

## Beschreibung

Die vorliegende Erfindung betrifft eine Gasturbinen-Brennkammer mit einem eine Brennkammer aufnehmenden Gehäuse und wenigstens einem in einem Endbereich angeordneten Brenner. Weiterhin betrifft die Erfindung ein Verfahren zur Luftführung in einer Gasturbinen-Brennkammer.

Brennkammern der gattungsgemäßen Art, insbesondere geschlossen gekühlte Brennkammern werden für hocheffiziente Gasturbinen eingesetzt. Diese bestehen üblicherweise aus einem mehrschaligen Aufbau in im wesentlichen konischer Konstruktion, mit üblicherweise kreisförmigem Querschnitt, wobei an einem Ende wenigstens einer, üblicherweise auch mehrere Brenner angeordnet sind, welchem ein Luft-/Brennstoffgemisch zugeführt wird. Die Brenner ragen in einen im wesentlichen konisch ausgebildeten Brennraum. Zum einen muß die Brennkammer gekühlt werden, zum anderen soll die zum Brenner geführte Luft das Heizgas vorwärmen.

Bei aus dem Stand der Technik bekannten geschlossen gekühlten Brennkammern wird durch eine Tragstruktur mittels Prallkühlungluft auf eine dem Heizgas ausgesetzte Platte geführt und strömt durch den Spalt zwischen Platte und Tragstruktur in axialer Richtung zum Brenner. Die Platte kühlt in diesem Bereich konvektiv. Derartige Konstruktionen haben den Nachteil, daß bei der schmalen aber axial langen Konstruktionen die Kühlung im konvektiven Bereich nur durch relativ hohe Strömungsgeschwindigkeiten der Kühlluft bewältigt werden kann, was zu erhöhten Druckverlusten und damit zu Einbußen im Wirkungsgrad führt. Ein weiterer Nachteil bekannter Lösungen besteht darin, daß auf aufgefundene Hotspots nicht die Möglichkeit partieller Einstellbarkeit besteht, so daß die Bauteile von der Tendenz her überkühlt werden müssen.

Ausgehend von diesem Stand der Technik liegt der vorliegenden Erfindung die **Aufgabe** zugrunde, ein Verfahren zur Luftführung und eine Konstruktion für eine Gasturbinen-Brennkammer bereitzustellen, welches zum einen eine verbesserte Kühlung bei verringerten Druckverlusten ermöglicht und darüber hinaus Überkühlungen durch gezielte Reaktion auf Hot Spots vermeidbar sind.

Zur technischen **Lösung** wird konstruktionsseitig mit der Erfindung vorgeschlagen, daß diese wenigstens ein Hohlelement aufweist, welches über wenigstens zwei Öffnungen mit anderen Luftführungsbereichen der Brennkammer in Verbindung steht.

Erfindungsgemäß ist vorgesehen, Hohlelemente an der Brennkammer anzuordnen oder auszubilden, welche über Öffnungen mit von den Hohlelementen getrennten Luftführungsbereichen der Brennkammer in Verbindung stehen. Die Hohlelemente können direkt bei der Herstellung des Gehäuses ausgebildet oder nachträglich im Gehäuse angeordnet werden.

Die Hohlelemente sind erfindungsgemäß mit wenigstens zwei Öffnungen versehen und vorteilhafterweise derart angeordnet bzw. ausgebildet, daß sie der tangentialen Luftführung dienen. Die Hohlelemente können im Inneren der Brennkammer angeordnet sein und mit Luftführungsbereichen im Brennkammeraußenbereich in Verbindung stehen. Auch können Hohlelemente am Brennkammeraußenbereich angeordnet sein und mit Luftführungsbereichen im Brennkammerinneren in Verbindung stehen. Auch ist ein mehrschichtiger Aufbau im Rahmen der Erfindung, wobei Hohlelemente sowohl an der Brennkammerinnenseite als auch an der Brennkammeraußenseite angeordnet sind und mit Luftführungsbereichen in Verbindung stehen. Gemäß einer besonders vorteilhaften Ausbildung der Erfindung können die Luftführungsbereiche zwischen innen und außen liegenden Hohlelementen ausgebildet sein.

Erfindungsgemäß ist ein Hohlelement als tangentiales Element ausgebildet. Erfindungsgemäß ist vorgesehen, den inneren Wandbereich einer Brennkammer wenigstens teilweise mit Hohlelementen auszubilden, welche über Öffnungen mit Bereichen an der Brennkammeraußenseite in Verbindung stehen. Die Brennkammern, die einen im wesentlichen beliebigen Querschnitt aufweisen können, können direkt bei der Herstellung mit den Hohlelementen ausgebildet oder nachträglich mit Hohlelementen ausgekleidet werden.

In vorteilhafter Weise werden die Hohlelemente als radiale Segmente eine Innenfläche der Brennkammer abdeckend ausgebildet.

Die Brennkammeraußenseite wird in vorteilhafter Weise in voneinander getrennte Luftführungsbereiche aufgeteilt, wozu es einem vorteilhaften Vorschlag der Erfindung im wesentlichen axial laufende Rippen in der Brennkammeraußenseite ausgebildet sind. Dabei werden Luftführungsbereiche ausgebildet, die der Zuführung von Luft durch Öffnungen in die in der Brennkammer ausgebildeten oder angeordneten Hohlelemente dienen, und es werden Luftführungsbereiche ausgebildet, in welche die aus den Hohlelementen kommende Luft eingeführt wird.

Die Hohlelemente sind einen geschlossen Hohlraum ausbildende Elemente aus metallischen, keramischen und/oder vergleichbaren Materialien, die ausschließlich über die Öffnungen mit der Brennkammeraußenseite in Verbindung stehen. In vorteilhafter Weise werden die Hohlelemente als Radialsegmente derart mit Öffnungen versehen, daß eine tangentiale Luftführung in Umfangsrichtung erzwungen wird.

Gemäß einem vorteilhaften Vorschlag der Erfindung kann das Gehäuse einschalig ausgebildet sein. Weiterhin kann das Gehäuse einstückig mit den an der Außenseite ausgebildeten Rippen fertiggestellt werden, beispielsweise durch gießen. Zur Trennung der Luftführungsbereiche wird gemäß einem vorteilhaften Vorschlag der Erfindung jeweils ein Rippenpaar mit einer Abdeckung versehen. Es ergeben sich somit zwischen zwei Rippen durch Abdeckung verschlossene Luftführungsbereiche, die jeweils benachbart ohne Abdeckung ausgebildete Rippenzwischenräume einschließen. Somit können gemäß der erfindungsgemäßen Konstruktion an der Brennkammeraußenseite durch geradzahlige Rippenausbildung eine einfache Trennung in voneinander getrennte Luftführungsbereiche erfolgen. Die ohne Abdeckung versehenen Luftführungsbereiche dienen der Luftzuführung. Hier sind in axialer Reihe Öffnungen ausgebildet, die in an der Brennkammerinnenseite angeordnete Hohlelemente führen. Die Hohlelemente weisen dann vorzugsweise in Umfangsrichtung (tangential) versetzte weitere Öffnungen auf, die in die zum Luftzuführungsbereich benachbarten mit Abdeckung versehene Rippenzwischenräume führen, in denen die Luft weitergeführt wird. Die Luft wird dann dem Brenner zugeführt.

Gemäß einem vorteilhaften Vorschlag der Erfindung ist es auch möglich, die abgeführte Luft aus axial vorderen Bereichen in weitere Hohlelemente einzuführen und weiter zu verteilen.

Die erfindungsgemäße Konstruktion ist im Hinblick auf Gießbarkeit und Komplexität der Gesamtkonstruktion gegenüber aus dem Stand der Technik bekannten mehrschaligen Konzepten erheblich vereinfacht. Darüber hinaus ergibt sich durch die aufgegossenen Rippen auch für axial lange Konstruktionen eine gewünschte Versteifung des Gehäuses.

Die wie eben beschriebene Konstruktion kann auch umgekehrt ausgebildet sein, indem in die Brennkammer ragende Rippen paarweise abgedeckt werden, um axiale Luftführungsbereiche zu bilden. In diesem Fall werden Hohlelemente im Gehäuse weiter außerhalb der Luftführungsbereiche positioniert, um dort eine tangentiale Luftführung zu bilden. Die mit den Hohlelementen verbundenen Luftführungsbereiche können auch zwischen innen und außen liegenden Hohlelementen positioniert werden. Auch in diesen Fällen sind einschalige Gehäusekonstruktionen möglich, aber auch mehrschalige Konstruktionen realisierbar, bei welchen abwechselnd tangentiale und axiale Luftführungsbereiche ausgebildet werden. So können axiale Luftführungsbereiche in beschriebener Weise durch Rippenbildung mit paarweise Abdeckung gebildet werden, während tangentiale Luftführungsbereiche ebenfalls durch geeignete Rippenausbildung und Abdeckungen gebildet werden.

Die Erfindung realisiert ein völlig neues Verfahren zur Luftführung in einer Gasturbinen-Brennkammer, in dem die Luft in Umfangsrichtung (tangential) in den Brennkammerkühlbereichen an der Brennkammerinnenseite verteilt wird. Hierdurch ergibt sich die Möglichkeit der gezielten Kühlung einzelner Bereiche, in denen beispielsweise Hotspots auftreten. Auch hier sind Umkehrungen des Verfahrens im Rahmen der Erfindung, also die alternative oder zusätzliche Ausbildung von tangential durchströmten Luftführungsbereichen am Brennkammeraußenbereich oder einem Mittelbereich.

Verfahrensseitig wird mit der Erfindung vorgeschlagen, daß Luft aus einem ersten Bereich außerhalb der Brennkammer durch wenigstens eine erste Öffnung in ein innerhalb der Brennkammer angeordnetes Hohlelement eingeführt, durch dieses hindurch durch wenigstens eine zweite Öffnung in einem zweiten Bereich außerhalb der Brennkammer und schließlich in Richtung Brenner weitergeführt wird.

Die verfahrensgemäße tangentiale Luftführung zur Kühlung der Brennkammer und die anschließende Axialführung zum Brenner bewirken eine verbesserte und gezielte Kühlung der Brennkammer ohne erhöhte Druckverluste und damit ohne Wirkungsgradeinbußen. Auch axial lange Konstruktionen können mit normalen Strömunggeschwindigkeiten der Kühlluft ausreichend gekühlt werden. Überkühlungen sind unnötig.

Das erfindungsgemäße Radialkühlungsprinzip läßt sich zudem ohne großen konstruktiven Aufwand mit an sich bekannten Prallkühlungen kombinieren, so daß sich beliebige Anpassungsmöglichkeiten der Kühlung in axialer Richtung nicht nur aus dem erfindungsgemäßen Radialkühlungsprinzip ergeben, sondern auch durch seine Variabilität in Bezug auf Kombinationen.

Mit der Erfindung wird eine mit geringem wirtschaftlichen Aufwand herstellbare Gasturbinen-Brennkammerkonstruktion und ein effektives Luftführungsprinzip vorgeschlagen, welche die Nachteile des Standes der Technik ausräumen.

Weitere Vorteile und Merkmale der Erfindung ergeben sich aus der folgenden Beschreibung anhand der Figuren. Dabei zeigen:
- Fig. 1: eine perspektivische Darstellung eines Ausführungsbeispiels für eine Gasturbinen-Brennkammer;
- Fig. 2: eine Darstellung gemäß Fig. 1 mit der zusätzlichen Darstellung der Luftführung;
- Fig. 3: ein Schnitt durch eine Brennkammer gemäß Fig. 1;
- Fig. 4: eine Prinzipdarstellung eines alternativen Ausführungsbeispiels für eine Gasturbinen-Brennkammer und
- Fig. 5: eine weitere Prinzipdarstellung für ein weiteres alternatives Ausführungsbeispiel für eine Gasturbinenbrennkammer.

In den Figuren sind gleiche Teile mit gleichen Bezugszeichen versehen.

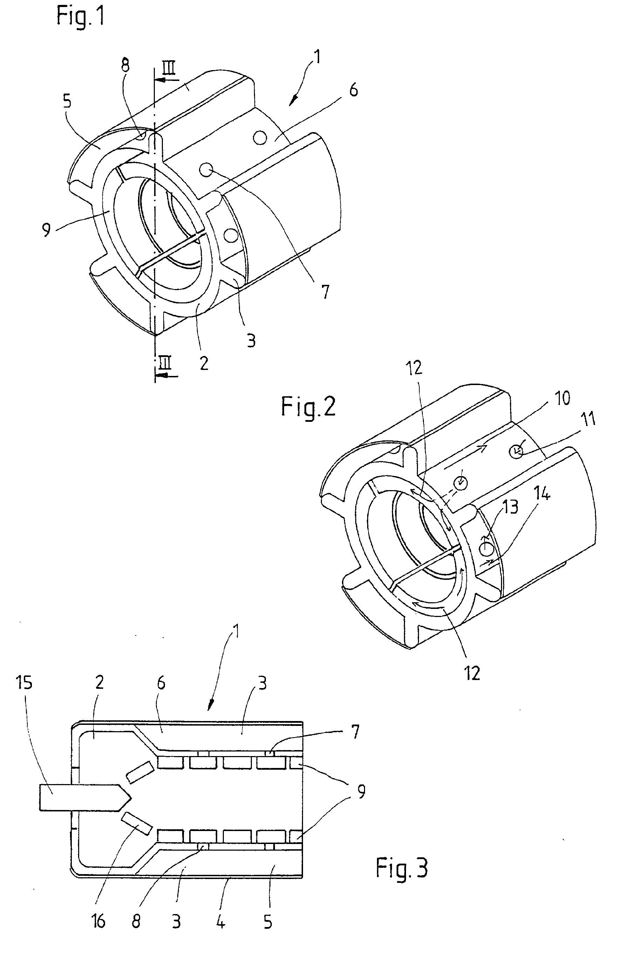

Die Figuren 1, 2 und 3 zeigen eine Brennkammer 1, die im gezeigten Ausführungsbeispiel aus einem gegossenen, einschaligen Gehäuse 2 besteht, an welches Rippen drei angegossen sind. Jeweils paarweise sind die Rippen beispielsweise durch nachträglich aufgebrachte Abdeckbleche 4 verschlossen. Es ergeben sich somit verschlossene Luftführungsbereiche 5 und offene Luftführungsbereiche 6. In den offenen Luftführungsbereichen 6 und den verschlossenen Luftführungsbereichen 5 sind jeweils Öffnungen 7 bzw. 8 ausgebildet, die direkt zu an der Brennkammerinnenwandung angeordnete Hohlelemente 9 geführt sind.

Am Ende der Brennkammer ist ein Brenner 15 angeordnet, dessen Heizgasführung in üblicher Weise in die Brennkammer führt. Hohlelemente 16 sind an den Brenner herangeführt.

Die Hohlelemente 9 sind metallische Elemente, Keramikelemente, Hohlsteine oder dergleichen geeignete Elemente, die auch aus Kombinationen der genannten Materialien gebildet sind. Die Hohlelemente sind jeweils im wesentlichen einem mittleren Bereich mit einer Öffnung 7 eines offenen Luftführungsbereiches 6 verbunden, und in den Endbereichen jeweils mit Öffnungen 8 eines verschlossenen Luftführungsbereiches 5.

Es ergibt sich die in Fig. 2 gezeigte Luftführung. Die offenen Luftführungsbereiche 6 dienen der Luftzuführung 10, von welcher die Öffnungsdurchströmung 11 in die Hohlelemente 9 abgezweigt wird. Zur Unterstützung und/oder zur Steuerung können strömungsbeeinflussende Hilfselemente eingesetzt werden, Luftleitbleche, Schikanen, Öffnungserweiterungen und dergleichen. Nach der Öffnungsdurchströmung 11 setzt eine im wesentlichen tangential verlaufende Radialströmung 12 durch die Hohlelemente ein. In den Endbereichen der Hohlelemente erfolgt der Öffnungsrückstrom 13 durch die Öffnungen 8 in jeweils geschlossene Luftführungsbereiche 5. In diesen findet dann die Luftabführung 14 bis zum Brenner 15 statt. Hier können Hohlelemente 16 auch zur direkten Luftzuführungsunterstützung eingesetzt werden.

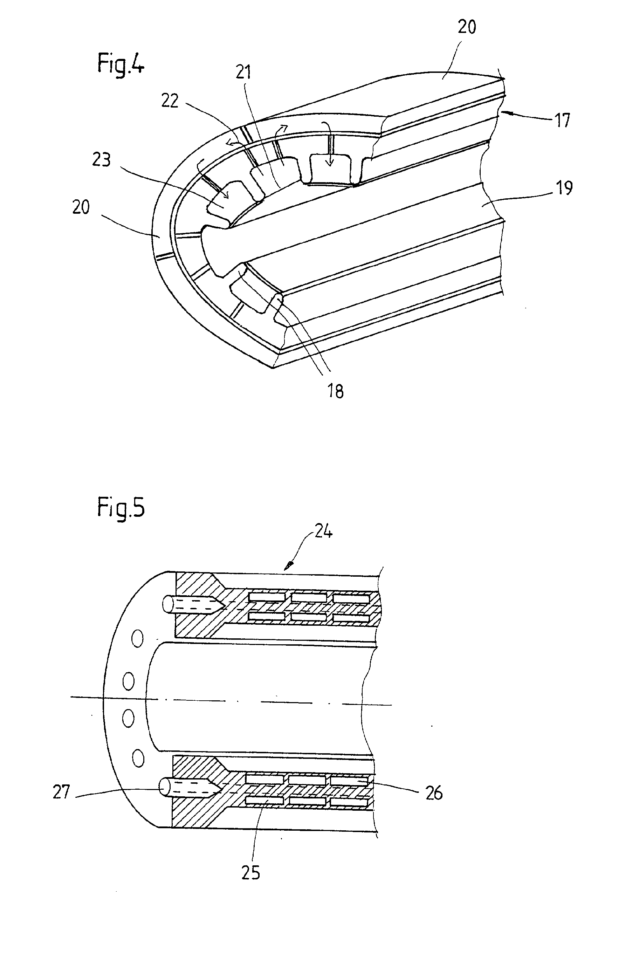

In Fig. 4 ist schematisch ein alternatives Ausführungsbeispiel dargestellt. Dieses unterscheidet sich von dem vorbeschriebenen Beispiel dadurch, daß eine Innenschale 17 mit in die Brennkammer weisenden Rippen 18 ausgebildet ist, welche paarweise durch Abdeckungen 19 abgedeckt sind. Es werden somit voneinander getrennte axiale Luftführungsbereiche 21 und 23 gebildet. Außerhalb der Innenschale 17 sind Hohlelemente 20 angeordnet, die in beschriebener Weise über wenigstens zwei Öffnungen mit den getrennten im Inneren liegenden axialen Luftführungsbereichen 21 und 23 verbunden sind, so daß sich eine tangentiale Luftströmung 22 ausbildet.

Fig. 5 zeigt eine weitere Prinzipdarstellung eines Ausführungsbeispiels, bei welchem bei einer Brennkammer 24 sowohl innenliegende Hohlelemente 26 als auch außenliegende Hohlelemente 25 ausgebildet sind, wobei axiale Luftführungsbereiche 27 dazwischenliegend ausgebildet sind. Das Luftführungsprinzip entspricht den bisherigen Ausführungsbeispielen, d. h. durch axiale Luftführungsbereiche 27 wird Luft zugeführt und durch nicht gezeigte Öffnungen in Hohlelemente im Innen- und Außenbereich eingeführt, wo eine tangentiale Luftströmung erfolgt, wobei anschließend die Luft aus den Hohlelementen wieder in axiale Luftführungsbereiche eintritt und dem Brenner bzw. den Brennern zugeführt wird.

Das beschriebene Ausführungsbeispiel dient nur der Erläuterung und ist nicht beschränkend.

## Patentansprüche

1. Gasturbinen-Brennkammer mit einem eine Brennkammer aufnehmenden Gehäuse und wenigstens einem in einem Endbereich angeordneten Brenner,
**dadurch gekennzeichnet, daß** diese wenigstens ein Hohlelement (9) aufweist, welches über wenigstens zwei Öffnungen (7, 8) mit anderen Luftführungsbereichen (5, 6) der Brennkammer (1) in Verbindung steht.

2. Gasturbinen-Brennkammer nach Anspruch 1,
**dadurch gekennzeichnet, dass** das Hohlelement (9) über die wenigstens zwei Öffnungen (7, 8) derart mit anderen Luftführungsbereichen (5, 6) verbunden ist, daß eine tangentiale Luftführung stattfindet.

3. Gasturbinen-Brennkammer nach einem der vorhergehenden Ansprüche, **dadurch gekennzeichnet, dass** wenigstens eine Hohlelement (9) innerhalb der Brennkammer (1) angeordnet ist und mit den wenigstens zwei Öffnungen (7, 8) mit dem Brennkammeraußenbereich in Verbindung steht.

4. Gasturbinen-Brennkammer nach einem der vorhergehenden Ansprüche, **dadurch gekennzeichnet, dass** wenigstens eine Hohlelement (9) außerhalb der Brennkammer (1) angeordnet ist und mit den wenigstens zwei Öffnungen (7, 8) mit dem Brennkammerinnenbereich in Verbindung steht.

5. Gasturbinen-Brennkammer nach einem der vorhergehenden Ansprüche, **dadurch gekennzeichnet, dass** sowohl innerhalb als auch außerhalb der Brennkammer Hohlelemente (9) angeordnet sind, welche mit dazwischen liegenden Luftführungsbereichen über die wenigstens zwei Öffnungen (7, 8) in Verbindung stehen.

6. Gasturbinen-Brennkammer nach Anspruch 1,
**dadurch gekennzeichnet, dass** das wenigstens eine Hohlelement (9, 16, 20) als tangentiales Segment ausgebildet ist.

7. Gasturbinen-Brennkammer nach Anspruch 1,
**dadurch gekennzeichnet, dass** das Hohlelement (9, 16, 20) als tangentiales Segment einen Teil der Brennkammerinnenfläche abdeckt.

8. Gasturbinen-Brennkammer nach Anspruch 1,
**dadurch gekennzeichnet, dass** das Hohlelement (9, 16, 20) als tangentiales Segment einen Teil der Brennkammeraußenfläche abdeckt.

9. Gasturbinen-Brennkammer nach einem der vorhergehenden Ansprüche, **dadurch gekennzeichnet, dass** die über die zwei Öffnungen (7, 8) mit dem Hohlelement (9, 16, 20) verbundenen Luftführungsbereiche (5, 6) als voneinander getrennte Luftführungsbereiche ausgebildet sind.

10. Gasturbinen-Brennkammer nach einem der vorhergehenden Ansprüche, **dadurch gekennzeichnet, dass** wenigstens eine der zwei Öffnungen (7) des Hohlelements (9) der Luftzuführung aus einem ersten Luftführungsbereich (6) der Brennkammer (1) in das Hohlelement (9) und wenigstens eine zweite Öffnung (8) der Luftabführung aus dem Hohlelement (9) in einen zweiten Luftführungsbereich (5) der Brennkammer (1) dient.

11. Gasturbinen-Brennkammer nach einem der vorhergehenden Ansprüche, **dadurch gekennzeichnet, dass** die Luftführungsbereiche (5, 6) der Brennkammer (1) durch im wesentlichen axial verlaufende Rippen (3, 18) gebildet sind.

12. Gasturbinen-Brennkammer nach Anspruch 11,
**dadurch gekennzeichnet, dass** jeweils ein Rippenpaar einen Raum bildend durch eine Abdeckung (4, 19) verbunden ist.

13. Gasturbinen-Brennkammer nach Anspruch 11,
**dadurch gekennzeichnet, dass** die Rippen (3, 18) einstückig mit dem Gehäuse (2, 17) ausgebildet sind.

14. Gasturbinen-Brennkammer nach einem der vorhergehenden Ansprüche, **dadurch gekennzeichnet, dass** das Gehäuse (2, 17) einschalig ausgebildet ist.

15. Gasturbinen-Brennkammer nach einem der vorhergehenden Ansprüche, **dadurch gekennzeichnet, dass** Luft aus einem Bereich (6, 21) zwischen zwei nicht durch eine Abdeckung (4, 19) verbundenen Rippen durch eine erste Öffnung (7) in ein Hohlelement (9, 20) geführt und durch wenigstens eine zweite Öffnung (8) in eine in den Bereich (5, 23) zwischen zwei durch eine Abdeckung (4, 19) verbundene Rippen (3, 18) zurück und zum Brenner geführt wird.

16. Verfahren zur Luftführung in einer Gasturbinen-Brennkammer mit einem eine Brennkammer (1) aufnehmenden Gehäuse (2) und einem in einem Endbereich angeordneten Brenner,
**dadurch gekennzeichnet, dass** Luft aus einem ersten Bereich (6) außerhalb der Brennkammer (1) durch wenigstens eine erste Öffnung (7) in ein innerhalb der Brennkammer (1) angeordnetes Hohlelement (9) eingeführt, durch dieses hindurch durch wenigstens eine zweite Öffnung (8) in einem zweiten Bereich (5) außerhalb der Brennkammer (1) und schließlich in Richtung Brenner weitergeführt wird.

17. Verfahren nach Anspruch 16,
**dadurch gekennzeichnet, dass** Luft durch in einem tangentialen Abschnitt der Brennkammer (1) angeordnete erste und zweite Öffnungen (7, 8) geführt wird.
